# EUROPÄISCHE PATENTSCHRIFT

(11) **EP 1 435 141 B1**
(45) Veröffentlichungstag und Bekanntmachung des Hinweises auf die Patenterteilung: **04.05.2005**
(21) Anmeldenummer: 02782833.4
(22) Anmeldetag: 04.10.2002
(51) Int. Cl.: H04B 3/56, H01R 31/00

(54) **ANORDNUNG ZUM ANSCHLUSS EINER POWERLINE-DATENÜBERTRAGUNGSEINRICHTUNG ODER EINES ZWISCHENVERSTÄRKERS AN EIN SPANNUNGSFÜHRENDES NIEDERSPANNUNGS-STROMNETZ**
ARRANGEMENT FOR CONNECTING A POWERLINE DATA TRANSMISSION DEVICE OR A REPEATER IN A LIVE LOW-VOLTAGE MAINS NETWORK
SYSTEME DE RACCORDEMENT D'UN DISPOSITIF DE TRANSMISSION DE DONNEES D'ALIMENTATION OU D'UN AMPLIFICATEUR INTERMEDIAIRE A UN RESEAU D'ALIMENTATION BASSE TENSION SOUS TENSION

(30) Priorität: 12.10.2001 DE 10150226
(43) Veröffentlichungstag der Anmeldung: 07.07.2004
(73) Patentinhaber: Power Plus Communications AG, 68163 Mannheim (DE)
(72) Erfinder: HAMM, Stephan, 68519 Mannheim (DE); MAYER, Eugen, 68161 Mannheim (DE); FLICKER, Jürgen, 69259 Wilhelmsfeld (DE); MIETRASCH, Uwe, 64289 Darmstadt (DE); RINDCHEN, Markus, 67574 Osthofen (DE); HEILER, Wolfgang, 68799 Reilingen (DE)
(74) Vertreter: Kesselhut, Wolf, Dipl.-Ing.
(86) Internationale Anmeldenummer: PCT/EP2002/011155
(87) Internationale Veröffentlichungsnummer: WO 2003/034608

(56) Entgegenhaltungen:
- EP-A- 0 981 188
- WO-A-98/33258
- DE-A- 19 728 270
- DE-C- 4 320 327
- GB-A- 2 331 683

## Beschreibung

Die Erfindung betrifft eine Anordnung zum Anschluss einer Powerline-Datenübertragungseinrichtung oder eines Zwischenverstärkers an ein spannungsführendes Niederspannungs-Stromnetz gemäß dem Oberbegriff von Anspruch 1.

Auf dem Gebiet der Telekommunikation werden heutzutage für die Übertragung von elektronischen Daten zwischen Rechnern, beispielsweise im Bereich des Internets, neben speziell für diese Zwecke ausgebildeten herkömmlichen Datenleitungen in zunehmendem Maße die Leitungen des öffentlichen Stromnetzes verwendet.

Bei dieser in Fachkreisen als "Powerline" System oder "Powerline Communication" (PLC) bezeichneten Technologie werden Datensignale neben der üblichen 50 Hz Spannung auf Stromleitungen aufmoduliert. Hierbei liegen die Pegel der verwendeten Signalspannungen in der Regel im Bereich von weniger als einem Volt und weisen Frequenzen im Bereich von 1,5 bis 30 MHz auf.

Die Verbindung zwischen Geräten des Powerline-Systems, die in einem vermaschten Stromnetz angeschlossen sind, erfolgt dabei nach den Prinzipien eines Datennetzes mit einem Bus als Medium. Da die hochfrequenten Signale mit zunehmender Entfernung mehr und mehr gedämpft werden, ist der Einsatz von Zwischenverstärkern erforderlich, die in Fachkreisen auch als "Repeater" bezeichnet werden. Die Zwischenverstärker werden dabei an Verteilervorrichtungen des sogenannten Niederspannungs-Stromnetzes mit Spannungen von ca. 220 V, wie z.B. Trafostationen, Straßenverteilern oder Hausanschlusskästen angebracht. Sie greifen die hochfrequenten Signale von den Leitungen ab, verstärken diese und koppeln die verstärkten Signale anschließend wieder in die Leitung ein. Hierbei besteht das Problem, dass an den Trafostationen, Straßenverteilern und Hausanschlusskästen von vorn herein keine Anschlussadapter zum Anschluss der Zwischenverstärker vorgesehen sind, so dass diese im nachhinein in die zuvor genannten Trafostationen, Straßenverteiler und Hausanschlusskästen unter vorheriger Abschaltung der Spannung eingebaut werden müssen, wodurch es zu einer zeitweiligen Stromunterbrechung in den betreffenden Haushalten kommt.

In gleicher Weise verhält es sich mit dem Anschluss von Datenübertragungseinrichtungen des Powerline-Systems, welche für die Anbindung der übergeordneten Netzwerkrechner oder Server der Datennetzbetreiber an die Trafostationen, Straßenverteiler und Hausanschlusskästen über Kupferleitungen, Glasfaserkabel oder Richtfunkstrecken etc. erforderlich sind. Dies ist darauf zurückzuführen, dass die Trafostationen, Straßenverteiler oder Hausanschlusskästen in der Regel auch für die Datenübertragungseinrichtungen keine vorbereiteten Anschlussadapter aufweisen und dem gemäß ebenfalls spannungslos geschaltet werden müssen.

Aufgrund der großen elektrischen Ströme und der damit verbundenen Gefahren, die beim Aus- und Wiedereinschalten der Spannung an Trafostationen, Straßenverteilern und Hausanschlusskästen auftreten, sind zum Abschalten der Spannung an diesen Einrichtungen besondere Schutzmaßnahmen erforderlich, für deren Einhaltung es besonders geschulten Personals bedarf. Darüber hinaus führt das Abschalten des elektrischen Stroms während der Montage der Datenübertragungseinrichtungen und /oder Zwischenverstärker aufgrund der Stromunterbrechung bei den betroffenen Haushalten zu Unannehmlichkeiten.

Aus der nicht vorveröffentlichten DE-A-10120 540 ist es diesbezüglich bekannt, ein Modem als Zwischenverstärker mittels eines außen isolierten und innen leitenden Adapters an die spannungsführenden Sammelschienen für die drei Phasen eines Verteilerkastens anzuschließen. Der Adapter wird hierbei auf das Gewinde einer Anschlussschraube für die weiterführenden Leitungen an der entsprechenden Sammelschiene aufgeschraubt und der in entsprechender Weise isolierte Zwischenverstärker anschließend auf den Adapter aufgesteckt.

Aus der EP-A-1 079 538 ist eine Ankoppeleinheit mit integriertem Steckkontaktbereich zur Ankopplung einer Datenübertragungsvorrichtung an die Phase eines elektrischen Energieübertragungsnetzes bekannt, die zumindest eine Reihenschaltung aus einer Feinsicherung, einem Koppelkondensator und einer Parallelschaltung aus einem Überspannungsableiter sowie einer Koppelinduktivität aufweist, welche mit einem Bezugspotential verbunden ist. Die Ankoppeleinheit umfasst ein Gehäuse, das ein Kontaktelement zum Anschluss der Datenübertragungsvorrichtung aufweist, welches mit der Parallelschaltung verbunden ist und einen integrierten Steckkontaktbereich für den Eingriff zumindest eines externen Anschlussteils an die Phase des Energieübertragungsnetzes besitzt, der mit der Feinsicherung verbunden ist.

Darüber hinaus ist aus der EP-A 0 984 514 eine Signalanschlussvorrichtung für ein Powerline-Telekommunikationssystem bekannt, welches eine isolierte Abdeckung für einen Sicherungsautomaten eines Stromnetzes aufweist, die ein Kontaktelement umfasst, mittels welchem eine elektrische Verbindung zu einem Leiter innerhalb des Sicherungsautomatens hergestellt werden kann, um vom Leiter Hochfrequenzsignale abzunehmen und einer Signalverarbeitungsschaltung zuzuführen.

Durch die Erfindung soll die Aufgabe gelöst werden, eine weitere Möglichkeit zum Anschluss einer Powerline-Datenübertragungseinrichtung oder eines Zwischenverstärkers an einen spannungsführenden Verteilerkasten, insbesondere einen Straßenverteiler, eines Niederspannungs-Stromnetzes, zu schaffen, mit welcher sich eine Vielzahl von Anschlüssen innerhalb kurzer Zeit und auf einfache und bequeme Weise realisieren lassen.

Diese Aufgabe wird erfindungsgemäß durch die Merkmale von Anspruch 1 gelöst.

Weitere Merkmale der Erfindung sind in den Unteransprüchen enthalten.

Gemäß der Erfindung umfasst eine Anordnung zum Anschluss einer Powerline-Datenübertragungseinrichtung, bzw. eines Powerline-Zwischenverstärkers, an einen spannungsführenden Verteilerkasten, insbesondere einen Straßenverteiler eines Niederspannungs-Stromnetzes, in dem zumindest eine Sammelschiene für den Nulleiter enthalten ist und zumindest eine Phase des Niederspannungs-Stromnetzes durch eine Starkstrom-Sicherung abgesichert ist, einen mit der Sammelschiene für den Nulleiter verbindbaren Klemmbügel. Der Klemmbügel weist einen die Sammelschiene umgreifenden ersten Schenkel sowie einen sich über ein Kontaktelement auf der gegenüberliegenden Seite der Sammelschiene abstützenden zweiten Schenkel auf. Die erfindungsgemäße Anordnung umfasst weiterhin einen ein isoliertes Gehäuse und eine elektrisch leitende Kontaktfläche aufweisenden Stecker, bei dem die Kontaktfläche in der Weise messerartig mit einem eine Ausnehmung aufweisenden gabelförmigen Ende versehen ist, dass sie auf einen phasenseitigen Kontaktbereich der Starkstrom-Sicherung aufsteckbar ist.

Es ist ein Vorteil der Erfindung, dass sich durch die Kombination der aufeinander abgestimmten Komponenten der erfindungsgemäßen Anordnung in Form eines leicht zu transportierenden Sets ganze Straßezüge oder eine Vielzahl von Wohnungen umfassende Häuserblocks mit einem vergleichsweise geringen Aufwand und in vergleichsweise kurzer Zeit nachträglich an das Powerline-System anschließen lassen, ohne dass hierzu die Straßenzüge bei der Montage des Systems für einen längeren Zeitraum stromlos geschaltet werden müssen.

Darüber hinaus ergibt sich der Vorteil, dass sich die erfindungsgemäße Anordnung durch den Einsatz eines Klemmbügels universell zum Anschluss des Powerline-Systems an eine Vielzahl von hinsichtlich ihrer Form und Abmessungen unterschiedlich ausgestalteten Sammelschienen für den Nulleiter einsetzen lässt.

Die Erfindung wird nachfolgend mit Bezug auf die Zeichnungen anhand von Beispielen beschrieben.

In den Zeichnungen zeigen:
- Fig. 1: eine schematische Darstellung der erfindungsgemäßen Anordnung und
- Fig. 2: eine Detailansicht des in der erfindungsgemäßen Anordnung verwendeten Steckers mit der daran angeordneten messerartigen Kontaktfläche.

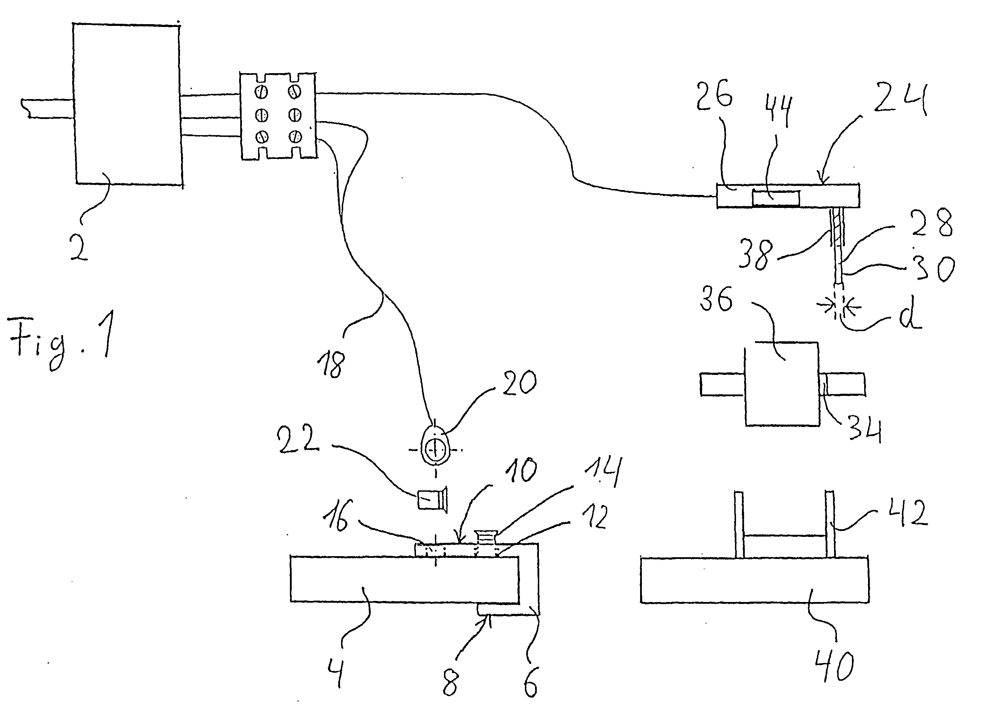

Wie in der Fig. 1 dargestellt ist, umfasst eine erfindungsgemäße Anordnung oder ein Set zum Anschluß einer Powerline-Datenübertragungseinrichtung oder eines Powerline-Zwischenverstärkers 2 an einen unter Spannung stehenden Verteilerkasten, insbesondere einen Straßenverteiler eines Niederspannungs-Stromnetzes mit beispielsweise 220 V, einen Klemmbügel 6, der mit einer im Verteilerkasten enthaltenen bekannten Sammelschiene 4 für den Nulleiter verbunden ist. Der Klemmbügel 6 ist im wesentlichen C-, oder U-förmig ausgebildet und besitzt einen die Sammelschiene 4 umgreifenden ersten Schenkel 8 sowie einen auf der gegenüberliegenden Seite der Klemmschiene 6 angeordneten zweiten Schenkel 10. Der zweite Schenkel 10 stützt sich unter Bildung eines elektrisch leitenden Kontaktes über ein Kontaktelement in Form einer Schraube 14 an der Sammelschiene 4 ab, die in eine im zweiten Schenkel 10 gebildete Gewindebohrung 12 in die Sammelschiene 4 einschraubbar ist.

Im zweiten Schenkel 10 ist ferner vorzugsweise eine weitere Gewindebohrung 16 gebildet, in die eine weitere Schraube 22 zur Befestigung eines elektrisch leitenden Ringkabelschuhs oder einer elektrisch leitenden Kontaktöse 20 einschraubbar ist, welch letztere mit der Datenübertragungseinrichtung bzw. dem Zwischenverstärker 2 über eine elektrische Leitung 18 verbunden ist. Der Klemmbügel 6 besteht vorzugsweise aus Kupfer oder einem anderen elektrisch leitenden Material.

Wie der Darstellung von Fig. 1 entnommen werden kann, weist der zweite Schenkel 10 des Klemmbügels 6 vorzugsweise eine größere Länge als der erste Schenkel 8 auf, wobei die weitere Gewindebohrung 16 vorzugsweise in dem den ersten Schenkel 8 überragenden Abschnitt des zweiten Schenkels 10 angeordnet ist. Hierdurch ergibt sich der Vorteil, dass der Klemmbügel 6 vergleichsweise schmal gehalten werden kann und dennoch eine in Hinblick auf die einzukoppelnde Hochfrequenz zuverlässige elektrisch leitende Verbindung erzeugt, die einen geringen Wellenwiderstand aufweist.

Zudem gestattet die unterschiedliche Länge der ersten und zweiten Schenkel 8, 10 eine universelle Anpassbarkeit der erfindungsgemäßen Anordnung an unterschiedlichste Ausgestaltungen der Sammelschiene 4 für den Nulleiter.

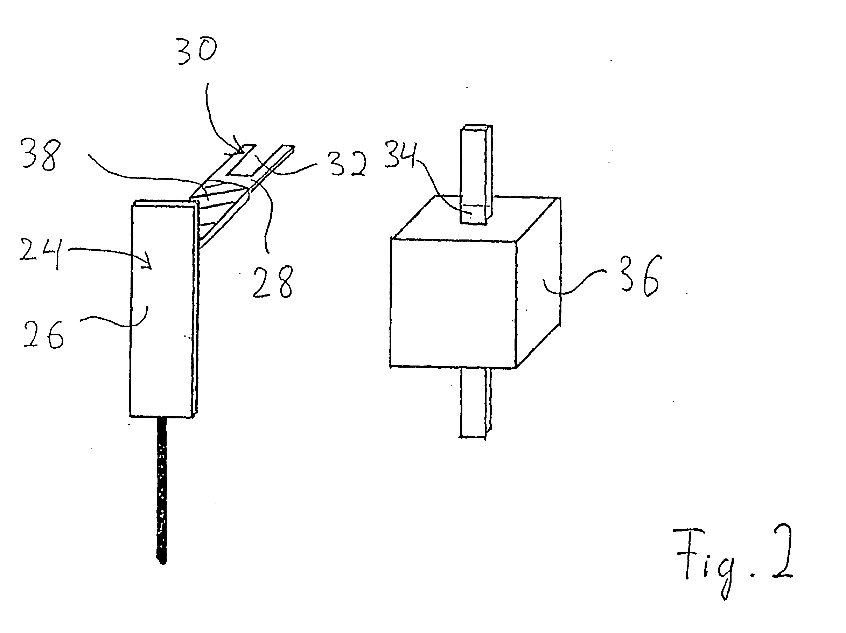

Wie der Fig. 1 weiterhin entnommen werden kann, umfasst die erfindungsgemäße Anordnung ferner einen Stecker 24, der ein isoliertes Gehäuse 26, beispielsweise aus Kunststoff, besitz, an welchem eine elektrisch leitende Kontaktfläche 28 angeordnet ist. Die elektrisch leitende Kontaktfläche 28 ist im wesentlichen messerartig oder klingenartig ausgebildet (vergleiche Fig. 2) und weist vorzugsweise ein gabelförmiges Ende 30 mit einer Ausnehmung 32 auf, welches auf einen phasenseitigen Kontaktbereich 34 einer Starkstrom-Sicherung 36 aufsteckbar ist, die die stromführende Phase im Verteilerkasten gegen Überströme absichert. Die Starkstrom-Sicherung 36 wird in den Verteilerkästen von Straßenverteilern seit langem zur Absicherung der "sogenannten heißen Phase" eingesetzt und ist beispielsweise durch die Bezeichnung "NH00" oder "NH01" spezifiziert. Sie dient der Absicherung von Strömen in der Größenordnung von 250 Ampere im Niederspannungsbereich von ca. 220 Volt.

Bei der bevorzugten Ausführungsform der Erfindung ist der Bereich zwischem dem Gehäuse 26 des Steckers 24 und der Ausnehmung 32 in vorteilhafter Weise mit einer Isolationsschicht 38 versehen, die eine solche Breite aufweist, dass ein unbeabsichtigtes Berühren der Kontaktfläche 28 des Steckers mit der Hand beim Aufschieben des Steckers 24 auf die Sicherung 36 mit Sicherheit ausgeschlossen ist, wenn sich die Sicherung 36 in ihrer zugehörigen Sicherungshalterung 40 im Verteilerkasten befindet.

Die messerartige Kontaktfläche 28 des Steckers 24 weist vorzugsweise eine Stärke d auf, die im wesentlichen dem Abstand entspricht, welcher zwischen dem Körper der Sicherung 36 und der angrenzenden Seitenwand 42 der Sicherungshalterung 40 besteht, wenn die Sicherung 36 in den Sicherungshalter eingesetzt ist.

Wie in Fig. 1 und 2 gezeigt ist, erstreckt sich die messerartige Kontaktfläche 28 des Steckers 24 vorzugsweise im Wesentlichen im rechten Winkel vom Gehäuse 26 des Steckers weg, wodurch sich der Vorteil ergibt, dass der Stecker unter optimaler Ausnutzung des Raumes unmittelbar von vorne her auf die freiliegende Sicherung 36 aufgesteckt werden kann, wobei das Gehäuse 26 im aufgesteckten Zustand des Steckers 24 parallel an der Außenseite des Körpers der Sicherung 36 entlang geführt ist, so dass es sich bei einem Druck auf die Oberseite des Gehäuses auf der Außenseite der Sicherung 36 abstützen kann. Hierdurch wird die Gefahr eines Verbiegens oder einer Beschädigung des Steckers bei Arbeiten am Verteilerkasten in vorteilhafter Weise reduziert.

Um die Gefahr eines Herausbrechens der messerartigen Kontaktfläche 28 aus dem isolierten Gehäuse 26 des Steckers 24 oder eine sonstige Beschädigung derselben zu reduzieren, ist der Stecker weiterhin vorzugsweise innerhalb des Gehäuses mit einer in den Zeichnungen nicht dargestellten Verstärkung versehen.

Weiterhin ist bei der bevorzugten Ausführungsform der Erfindung innerhalb des Gehäuses 26 des Steckers 24 vorzugsweise eine weitere Sicherung 44 angeordnet, die die Datenübertragungseinrichtung oder den Zwischenverstärker 2 des Powerline-Systems vor Überspannungen schützt.

### BEZUGSZEICHENLISTE

- d: Abstand
- 2: Powerline-Datenübertragungseinrichtung oder Zwischenverstärker
- 4: Sammelschiene für Nulleiter
- 6: Klemmbügel
- 8: 1. Schenkel
- 10: 2. Schenkel
- 12: Gewindebohrung
- 14: Schraube
- 16: weitere Gewindebohrung
- 18: elektrische Leitung
- 20: Kontaktöse / Ringkabelschuh
- 22: weitere Schraube
- 24: Stecker
- 26: isoliertes Gehäuse
- 28: elektrisch leitende Kontaktfläche
- 30: gabelförmiges Ende
- 32: Ausnehmung
- 34: Kontaktbereich
- 36: Starkstrom-Sicherung
- 38: Isolationsschicht
- 40: Sicherungshalterung
- 42: Seitenwand der Sicherungshalterung
- 44: weitere Sicherung

## Patentansprüche

1. Anordnung zum Anschluss einer Powerline-Datenübertragungseinrichtung oder eines Zwischenverstärkers (2) an einen spannungsführenden Verteilerkasten, insbesondere einen Straßenverteiler, eines Niederspannungs-Stromnetzes, wobei der Verteilerkasten zumindest eine Sammelschiene (4) für den Nulleiter enthält, und zumindest eine Phase des Niederspannungs-Stromnetzes durch eine Starkstrom-Sicherung (36) abgesichert ist,
**gekennzeichnet durch**
einen mit der Sammelschiene (4) für den Nulleiter verbundenen Klemmbügel (6), der einen die Sammelschiene (4) umgreifenden ersten Schenkel (8) sowie einen sich über ein Kontaktelement (14) auf der gegenüberliegenden Seite der Sammelschiene (4) abstützenden zweiten Schenkel (10) umfasst; sowie einen ein isoliertes Gehäuse (26) und eine elektrisch leitende Kontaktfläche (28) aufweisenden Stecker (24), wobei die Kontaktfläche (28) des Steckers (24) messerartig mit einem gabelförmigen Ende (30) versehen ist, und eine Stärke (d) aufweist, die im Wesentlichen dem Abstand zwischen dem Körper der Sicherung (36) und einer angrenzenden Seitenwand (42) einer Halterung (42) für die Sicherung (36) entspricht, in der Weise, dass die Kontaktfläche (28) auf einen phasenseitigen Kontaktbereich (34) der Sicherung (36) aufsteckbar ist.

2. Vorrichtung nach Anspruch 1,
**dadurch gekennzeichnet,**
**dass** das Kontaktelement durch eine Schraube (14) gebildet wird, welche in eine im zweiten Schenkel (10) des Klemmbügels (6) gebildete Gewindebohrung (12) einschraubbar ist.

3. Vorrichtung nach Anspruch 1 oder 2,
**dadurch gekennzeichnet,**
**dass** im zweiten Schenkel (10) des Klemmbügels (6) eine weitere Gewindebohrung (16) gebildet ist, in die eine weitere Schraube (22) zur Befestigung einer mit der Datenübertragungseinrichtung oder dem Zwischenverstärker (2) verbindbaren Kontaktöse (20) einschraubbar ist.

4. Vorrichtung nach einem der vorhergehenden Ansprüche,
**dadurch gekennzeichnet,**
**dass** der zweite Schenkel (10) eine größere Länge als der erste Schenkel (8) aufweist.

5. Vorrichtung nach einem der vorhergehenden Ansprüche,
**dadurch gekennzeichnet,**
**dass** der Bereich zwischen dem Gehäuse (26) des Steckers (24) und der Ausnehmung (32) mit einer Isolationsschicht (38) versehen ist, derart, dass beim Aufschieben des Steckers (24) auf die Sicherung (36) ein Berühren der Kontaktfläche (28) des Steckers mit der Hand ausgeschlossen ist.

6. Vorrichtung nach einem der vorhergehenden Ansprüche,
**dadurch gekennzeichnet,**
**dass** sich die messerartige Kontaktfläche (28) des Steckers (24) im Wesentlichen im rechten Winkel vom Gehäuse (26) weg erstreckt.

7. Vorrichtung nach Anspruch 6,
**dadurch gekennzeichnet,**
**dass** der Stecker (24) im Bereich der Aufnahme der messerartigen Kontaktfläche (28) im Gehäuse mit einer Verstärkung versehen ist.

8. Vorrichtung nach einem der vorhergehenden Ansprüche,
**dadurch gekennzeichnet,**
**dass** im Gehäuse (26) des Steckers (24) eine weitere Sicherung (44) angeordnet ist, die die Powerline-Datenübertragungseinrichtung oder den Zwischenversträker (2) vor Überspannungen aus dem Niederspannungs-Stromnetz schützt.

## Claims

1. Arrangement for connecting a powerline data transmission device or a repeater (2) to a voltage-carrying distribution box, in particular a street distributor, of a low-voltage mains network, the distribution box containing at least one busbar (4) for the neutral conductor, and at least one phase of the low-voltage mains network is protected by a high-voltage fuse (36), **characterised by** a clamp (6) that is connected to the busbar (4) for the neutral conductor and comprises a first arm (8) that surrounds the busbar (4) and a second arm (10) that is supported via a contact element (14) on the opposite side of the busbar (4); and by a plug (24) comprising an insulated housing (26) and an electrically conductive contact surface (28), the contact surface (28) of the plug (24) being provided with a forked end (30), in the manner of a blade, and exhibiting a thickness (d) that corresponds substantially to the distance between the body of the fuse (36) and an adjacent side wall (42) of a holder (42) for the fuse (36), such that the contact surface (28) may be connected to a phase-side contact region (34) of the fuse (36).

2. Device according to claim 1, **characterised in that** the contact element is formed by a screw (14), which may be screwed into a threaded hole (12) formed in the second arm (10) of the clamp (6).

3. Device according to either claim 1 or claim 2, **characterised in that** a further threaded hole (16), into which a further screw (22) for fastening a contact eyelet (20), which may be connected to the data transmission device or the repeater (2), may be screwed, is formed in the second arm (10) of the clamp (6).

4. Device according to any one of the preceding claims, **characterised in that** the second arm (10) is longer than the first arm (8).

5. Device according to any one of the preceding claims, **characterised in that** the region between the housing (26) of the plug (24) and the recess (32) is provided with an insulating layer (38) such that, when the plug (24) is placed on the fuse (36), the user's hand does not enter into contact with the contact surface (28) of the plug.

6. Device according to any one of the preceding claims, **characterised in that** the blade-like contact surface (28) of the plug (24) extends substantially at right angles from the housing (26).

7. Device according to claim 6, **characterised in that**, in the region in which the blade-like contact surface (28) is received in the housing, the plug (24) is provided with a reinforcement.

8. Device according to any one of the preceding claims, **characterised in that** a further fuse (44), which protects the powerline data transmission device or the repeater (2) from excess voltages from the low-voltage mains network, is arranged in the housing (26) of the plug (24).

## Revendications

1. Agencement pour le raccordement d'un dispositif de transmission de données par ligne secteur ou d'un amplificateur intermédiaire (2) à une boîte de répartition sous tension, en particulier un répartiteur de voirie, d'un réseau à basse tension, la boîte de répartition comportant au moins une barre omnibus (4) pour le neutre et au moins une phase du réseau à basse tension étant protégée par un fusible (36) pour courants forts, **caractérisé par** un étrier de serrage (6) relié à la barre omnibus (4) pour le neutre, qui comporte une première branche (8) enserrant la barre omnibus (4) ainsi qu'une seconde branche (10) s'appuyant sur le côté opposé de la barre omnibus (4) par l'intermédiaire d'un élément de contact (14) ; ainsi que par un connecteur (24) présentant un boîtier isolé (26) et une surface de contact (28) conductrice électriquement, la surface de contact (28) du connecteur (24) étant munie à la manière d'une lame d'une extrémité (30) en forme de fourche et présentant une épaisseur (d) qui correspond essentiellement à la distance entre le corps du fusible (36) et une paroi latérale limitrophe (42) d'une fixation (40) pour le fusible (36), de telle manière que la surface de contact (28) est emboîtable sur une zone de contact du côté phase (34) du fusible (36).

2. Dispositif suivant la revendication 1, **caractérisé en ce que** l'élément de contact est formé par une vis (14) qui peut être vissée dans un taraudage (12) réalisé dans la seconde branche (10) de l'étrier de serrage (6).

3. Dispositif suivant l'une des revendications 1 et 2, **caractérisé en ce que** dans la seconde branche (10) de l'étrier de serrage (6) est réalisé un autre taraudage (16) dans lequel peut être vissée une autre vis (22) pour la fixation d'un oeillet de contact (20) raccordable au dispositif de transmission de données ou à l'amplificateur intermédiaire (2).

4. Dispositif suivant l'une des revendications précédentes, **caractérisé en ce que** la seconde branche (10) présente une longueur plus grande que la première branche (8).

5. Dispositif suivant l'une des revendications précédentes, **caractérisé en ce que** la zone comprise entre le boîtier (26) du connecteur (24) et l'évidement (32) est munie d'une couche isolante (38) de telle sorte que, lors de l'enfichage du connecteur (24) sur le fusible (36), un contact de la main avec la surface de contact (28) du connecteur est exclu.

6. Dispositif suivant l'une des revendications précédentes, **caractérisé en ce que** la surface de contact (28) analogue à une lame du connecteur (24) s'étend essentiellement à angle droit à l'écart du boîtier (26).

7. Dispositif suivant la revendication 6, **caractérisé en ce que** le connecteur (24) est muni d'un renforcement dans la zone du logement dans le boîtier de la surface de contact (28) analogue à une lame.

8. Dispositif suivant l'une des revendications précédentes, **caractérisé en ce que** dans le boîtier (26) du connecteur (24) est disposé un autre fusible (44), qui protège le dispositif de transmission de données par ligne secteur ou l'amplificateur intermédiaire (2) contre des surtensions provenant du réseau à basse tension.
